# EUROPÄISCHE PATENTSCHRIFT

(11) **EP 1 925 835 B1**
(45) Veröffentlichungstag und Bekanntmachung des Hinweises auf die Patenterteilung: **27.03.2013**
(21) Anmeldenummer: 06024236.9
(22) Anmeldetag: 22.11.2006
(51) Int. Cl.: F16C 33/10, F01D 25/16

(54) **Radialgleitlager**
Radial sliding bearing
Palier lisse radial

(43) Veröffentlichungstag der Anmeldung: 28.05.2008
(73) Patentinhaber: Siemens Aktiengesellschaft, 80333 München (DE)
(72) Erfinder: Hofmann, Andreas, 91091 Grossenseebach (DE)

(56) Entgegenhaltungen:
- DE-A1- 2 111 973
- DE-A1- 3 248 097
- FR-A1- 2 651 845
- GB-A- 919 480
- US-A- 5 281 032

## Beschreibung

Die Erfindung betrifft ein Radialgleitlager zur Lagerung einer Welle einer Turbomaschine, insbesondere einer Kondensationsturbine, mittels eines um die Welle aufgebauten Wasserfilms, umfassend eine Wasserzuführung zum Zuführen von Wasser zum Wasserfilm.

Bei stationären Turbomaschinen, wie Gas- oder Dampfturbinen, wird die die laufende Beschaufelung tragende Welle üblicherweise an ihren beiden Enden in radialen Gleitlagern gelagert, die mit schwer entflammbarem Öl als Schmiermittel beaufschlagt sind. Um laufende Kosten für Schmiermittel und vor allem die Brandgefahr an Turbomaschinen zu verringern, ist angestrebt, die Turbomaschinen komplett ölfrei zu betreiben, so dass Öl als Schmiermittel durch ein geeignetes anderes Schmiermittel, beispielsweise durch Wasser, zu ersetzen ist.

Aus der DE 21 11 973 ist bekannt, einen Rotor einer Turbomaschine mit Hilfe eines hydrostatischen Wasserradiallagers zu lagern. Das Lager ist in der axialen Mitte der Welle des Rotors der Turbomaschine angeordnet und dient als Hilfslager zur Unterstützung von zwei die Welle an ihren Enden lagernden Ölgleitlagern. Durch die zusätzliche mittlere Lagerung der Welle können Schwingungen der Welle abgebaut werden. Um eine aufwendige Trennung des Schmiermittels des hydrostatischen Lagers und des Arbeitsmediums der Turbomaschine bei einer Verwendung in einer Dampfturbine zu vermeiden, wird das Lager mit Wasser geschmiert, das mit dem Arbeitsmedium Dampf der Dampfturbine ohne weiteres gemischt werden kann.

Um ein wassergeschmiertes hydrostatisches Radiallager als Hauptlager für eine Turbine verwenden zu können, ist ein sehr hoher Wasserdurchsatz durch die Lagerspalte des Radiallagers nötig, weshalb eine solche Lösung für Wasserturbinen versucht wurde. So ist aus der EP 0 099 796 B1 eine Pumpenturbine für ein hohes Gefälle bekannt, deren Welle von zwei wassergeschmierten Radiallagern gelagert wird. Als Schmiermittel steht das als Arbeitsmedium verwendete Wasser in genügender Menge zur Verfügung, so dass ein hoher Wasserdurchsatz vertretbar ist.

Radialgleitlager mit einer schrägen Schmiermittelzuführung zur Verringerung von Wirbelbildungen beim Eintritt von Schmiermittel in die Lagerspalte sind aus der US-A-5 281 032 bekannt.

Zum Erzeugen hoher Lagerdrücke für schwere Wellen sind aus der GB 919 480 A und der FR 2651845 A1 Radialgleitlager mit zwei bzw. drei sich auf tangentialer Strecke radial verjüngenden Schmiermittelspalten sind bekannt.

Aus der EP 0 099 796 B1 ist außerdem bekannt, eine Labyrinthdichtung, die zur Abdichtung zweier Druckräume an der Welle der Wasserturbine dient, durch das wassergeschmierte Radiallager zu ersetzen, so dass das Radiallager neben seiner Lagerfunktion zusätzlich eine abdichtende Funktion übernimmt.

Auch bei Dampfturbinen ist das Problem der Abdichtung eines Niederdruck-Dampfraums gegen eine Umgebung der Dampfturbine bekannt. Bei einer Verwendung eines wassergeschmierten Radiallagers in einer Dampfturbine als Lager und zusätzlich als Ersatz einer Dichtung, wie beispielsweise einer Labyrinthdichtung, muss der zwischen der Welle und einer Statorlagerschale ausgebildete Wasserfilm zur Lagerung der Welle sehr gleichmäßig und durchgängig sein, um den Dampfraum ausreichend gegen die Umgebung abzudichten. Um eine solche gute Abdichtung in Verbindung mit relativ hohen Dampfdrücken zu erreichen, müssen bekannte wassergeschmierte Radiallager - sollen sie für Turbomaschinen geeignet sein - mit einem sehr hohen Wasserdurchsatz betrieben werden.

Es ist daher die Aufgabe der Erfindung, ein Radialgleitlager zur Lagerung einer Welle einer Turbomaschine anzugeben, mit dem gute Lagereigenschaften, insbesondere eine geringe Verlustleistung, in Verbindung mit einem geringen Schmierwasserverbrauch erreichbar sind.

Diese Aufgabe wird durch ein Radialgleitlager der Eingangs genannten Art gelöst, bei dem die Wasserzuführung ein Zuführmittel zum in Umfangrichtung tangential ausgerichteten Zuführen von Wasser zum Wasserfilm umfasst. Hierdurch kann eine gleichmäßige und wirbelarme Zuführung des Schmierwassers zum Wasserfilm bzw. Spalt zwischen der Welle und einer Statorlagerschale erreicht werden, so dass sich ein gleichmäßiger und stabiler Wasserfilm ausbilden kann. Durch die hohe Stabilität des Wasserfilms können mit einem relativ dünnen Wasserfilm gute Lagereigenschaften und eine gute Unwuchtdämpfung erzielt werden.

Das Zuführmittel ist so ausgebildet, dass es das Schmierwasser in Umfangrichtung tangential ausgerichtet zum Wasserfilm zuführt. Auf diese Weise kann ein Umlenken des Schmierwassers kurz vor dem Spalt zumindest weitgehend vermieden werden, so dass das Wasser wirbelarm und gleichmäßig in den Spalt eintritt. Vorteilhafterweise ist das Zuführmittel dazu vorgesehen, zumindest im Wesentlichen das gesamte den Wasserfilm aufbauende Wasser tangential zum Wasserfilm bzw. zum Spalt zuzuführen.

Zum Zuführen des Wassers zum Wasserfilm kann das Zuführmittel eine Leitung umfassen, innerhalb derer das Wasser geleitet wird, wobei der Strom des Wassers bei Austritt aus der Leitung in einen teilweise von der Welle begrenzten Raum zumindest im Wesentlichen in Tangentialrichtung ausgerichtet ist. Zweckmäßigerweise wird das Wasser durch das Zuführmittel in Tangentialrichtung weiter zum Spalt bzw. Wasserfilm geführt, so dass es zumindest weitgehend ohne Richtungsänderung tangential in den Spalt einströmen kann. Das Radialgleitlager kann ein hydrostatisches und/oder hydrodynamisches Lager sein. Das hydrostatische Radialgleitlager kann ein hydrodynamisches Radialgleitlager als besondere Ausführungsformen mit einschließen.

Durch die Verwendung von Wasser als Schmiermittel kann eine zusätzliche Abdichtung eines Dampfraums gegen das Radiallager mittels einer zusätzlichen Dichtung unterbleiben, da eine Zusammenführung von Dampf als Arbeitsmittel der Turbomaschine mit dem Schmierwasser nicht unterbunden werden muss und das Radiallager selbst abdichtende Funktion übernehmen kann. Durch die tangentiale Zuführung des Wassers zum Wasserfilm kann eine gleichmäßige Ausbildung des Wasserfilms erreicht werden, der eine insbesondere für eine Kondensationsturbine ausreichende Dichtwirkung aufweist. Von daher ist es vorteilhaft, wenn das Radiallager eine Wellendichtung zur Abdichtung eines Wellenendes der Welle gegen Turbinendampf ist, wobei dem Wasserfilm eine abdichtende Funktion zukommt.

Eine hohe Dichtigkeit des Wasserfilms über den gesamten Umfang kann erreicht werden, wenn das Radiallager ein Mehrkeillager ist. Hierdurch kann eine tangentiale Länge des Wasserfilms zwischen mehreren Einströmstellen kurz gehalten werden, beispielsweise knapp 180° bei zwei Wasserkeilen oder knapp 120° bei drei Wasserkeilen, so dass eine im Strom anfängliche Störung zu keinem Abriss des Wasserfilms an einer in der Strömung späteren Stelle führt.

Eine besonders hohe Stabilität des Wasserfilms gegen Störungen oder einen Abriss kann erreicht werden, wenn eine radiale Dicke des Wasserfilms von einer Einströmstelle bis zur nächsten Einströmstelle kontinuierliche abnimmt. Hierdurch wird das Wasser ununterbrochen zusammen- und in eventuelle Störungen hineingedrückt, so dass den Störungen entgegengewirkt wird.

Eine kontinuierlich abnehmende Spaltdicke kann baulich einfach erreicht werden, wenn das Radiallager eine schneckensegmentförmige Statorlagerschale aufweist. Als schneckensegmentförmig kann die Statorlagerschale in diesem Zusammenhang gesehen werden, wenn sie über einen tangentialen Winkelbereich von zumindest 30° kontinuierlich Welle zur näher rückt, so dass ein Spalt zwischen Welle und Statorlagerschale kontinuierlich enger wird. Zweckmäßigerweise erstreckt sich die Schneckenform vollständig zwischen zwei Einströmstellen bzw. Lagertaschen.

In einer weiteren vorteilhaften Ausführungsvariante ist die Lagerschale mit einer kreissegmentförmigen Lagerinnenfläche versehen, wodurch eine einfache Herstellung der Lagerinnenfläche ermöglicht ist. Außerdem ist hierdurch eine gleichmäßige und wirbelarme Führung des Wassers in tangentialer Richtung ermöglicht.

Wie oben bemerkt, ist durch ein Mehrkeillager ein stabiler und gleichmäßiger Wasserfilm erzielbar, ebenso wie durch eine stetige Verengung des Lagerspalts in Tangentialrichtung. Beide Ausgestaltungen können auf einfache Weise vereinigt werden, wenn das Radiallager eine Statorlagerschale mit mehreren, versetzt zu einer idealen Rotationsachse der Welle angeordneten Schalenelementen aufweist. Hierbei liegen ein innerer Fokus bzw. eine innere Achse der einzelnen Schalenelemente jeweils versetzt zueinander.

Bei der Lagerung der Welle treten nicht in jede Radialrichtung die gleichen Kräfte auf. So bewirkt das Eigengewicht der Welle, dass unter der Welle ein stärkerer Wasserfilm aufgebaut werden sollte als über der Welle. Eine einfache Anpassung der Dicke des Wasserfilms an solche Lagerungsbedingungen kann einfach erreicht werden, wenn die Schalenelemente unterschiedlich versetzt zur idealen Rotationsachse angeordnet sind.

Eine einfache Herstellung des Radiallagers kann erreicht werden, wenn die Schalenelemente Halbschalen sind. Außerdem kann ein Zustrom von Wasser auf zwei Stellen begrenzt und eine Störung des Wasserfilms auf zwei Stellen beschränkt werden, womit ein geringer Wasserdurchsatz erreichbar ist.

In einer weiteren vorteilhaften Ausgestaltung der Erfindung weist das Radiallager zumindest eine Lagertasche zum Zuführen des Wassers zum Wasserfilm auf und das Zuführmittel ist zum zumindest überwiegend tangential ausgerichteten Zuführen des Wassers zur Lagertasche ausgebildet. Es kann ein gleichmäßiger Übergang von einer Leitung des Zuführmittels zum Spalt geschaffen werden, ohne das Wasser in der Lagertasche in einer radialen oder axialen Richtungskomponente umlenken zu müssen. Die Lagertasche ist bevorzugt ein zwischen der Welle und einer Statorlagerschale angeordneter Raum und kann ein in Relation zum Spalt verdickter Raum an der Welle am Spalteintritt sein.

Die Erfindung wird anhand eines Ausführungsbeispiels näher erläutert, das in den Zeichnungen dargestellt ist.

Es zeigen:
FIG 1 eine durch ein Wasserlager radial gelagerte Welle an einer Niederdruckstufe einer Dampfturbine und
FIG 2 das Wasserlager aus FIG 1 in einer schematischen Schnittdarstellung.

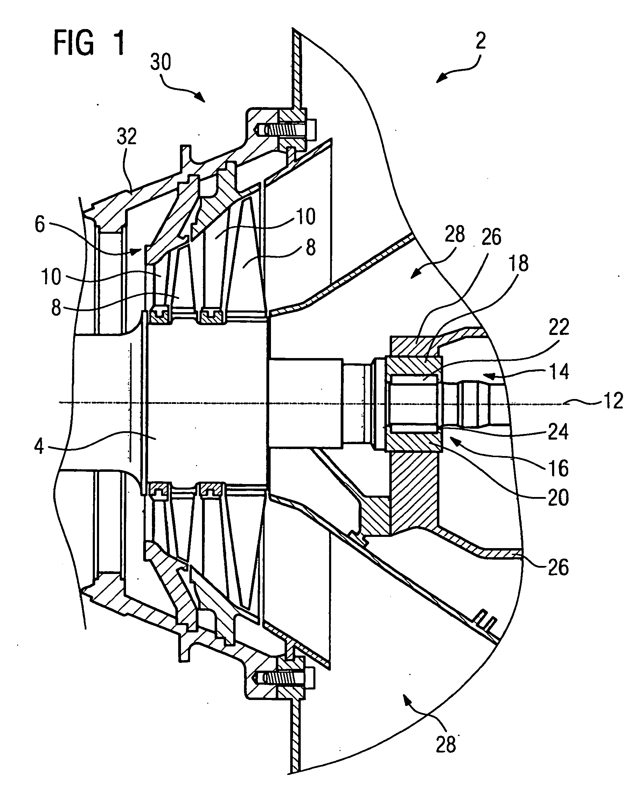

FIG 1 zeigt einen Ausschnitt aus einer Dampfturbine 2 an der Niederdruckseite der Dampfturbine 2 in einer vereinfachten Darstellung. Die als Kondensationsturbine ausgeführte Dampfturbine 2 umfasst eine Welle 4, an der eine Hochdruckstufe, eine Mitteldruckstufe und eine Niederdruckstufe 6 mit jeweils mehreren Laufschaufelkränzen 8 und Leitschaufelkränzen 10 angeordnete sind. Während eines Betriebs der Dampfturbine 2 strömt Dampf durch die drei Stufen und treibt die Laufschaufeln der Laufschaufelkränze 8 und damit die Welle 4 zu einer Rotation um eine Rotationsachse 12 an.

Die Welle 4 ist auf der Niederdruckseite radial in einem hydrostatischen Radialgleitlager 14 gelagert, das auch hydrodynamische Eigenschaften hat und in der Nähe des niederdruckseitigen Endes der Welle 4 angeordnet ist. Das Radialgleitlager 14 ist in FIG 1 in einem Längsschnitt stark vereinfacht dargestellt. In einer Statorlagerschale 16 mit einem oberen Schalenelement 18 und einem unteren Schalenelement 20 ist um die Welle 4 ein Wasserfilm 22 aufgebaut, in dem die Welle 4 schwimmend gelagert ist. Das in den Wasserfilm 22 von einer nicht dargestellten Pumpe mit einem Druck von etwa 1 bar eingedrückte Schmierwasser fließt durch Spalte 24 in Axialrichtung der Welle 4 beidseitig aus dem Wasserfilm 22 heraus und wird in einem Sammelbecken gesammelt und der Pumpe erneut zugeführt.

Die beiden Schalenelemente 18, 20 sind in einem Gehäuse 26 gelagert, das einen Dampfraum 28 von einem Umgebungsraum 30 um ein Turbinengehäuse 32 abtrennt. Das Schmierwasser des Radialgleitlagers 14 übernimmt zusätzlich zu der lagernden Funktion eine abdichtende Funktion und dichtet den Dampfraum 28 gegen den Umgebungsraum 30 ab. Hierbei findet eine Mischung des Dampfs aus dem Dampfraum 28 mit dem niederdruckseitig aus dem Spalt 24 austretenden Schmierwasser statt, die jedoch unproblematisch ist.

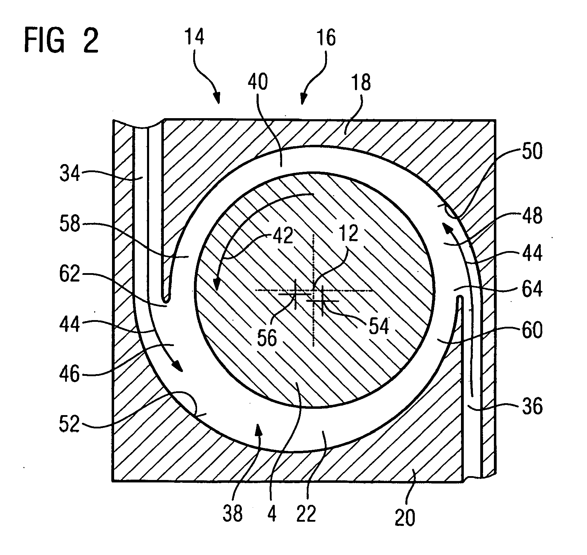

Das hydrostatische Radialgleitlager 14 ist in FIG 2 in einer stark vereinfachten Schnittdarstellung quer zur Rotationsachse 12 der Welle 4 dargestellt. Zwischen dem oberen Schalenelement 18 und dem unteren Schalenelement 20 ist die Welle 4 in dem Wasserfilm 22 schwimmend gelagert, dessen radial Dicke in FIG 2 der besseren Darstellbarkeit halber vergrößert dargestellt ist.

Aus einem oberen Zuführmittel 34 und einem unteren Zuführmittel 36 einer Wasserzuführung wird Schmierwasser in zwei den Wasserfilm 22 einschließende Spalte 38, 40 mit einem Überdruck von etwa 1 bar eingedrückt, wobei ein Einströmen des Wassers durch die Rotation der Welle 4 in Rotationsrichtung 42 begünstigt wird und die Welle 4 das Wasser in die Spalte 38, 40 einzieht. Beide Zuführmittel 34, 36 sind in Axialrichtung gleichmäßig länglich ausgebildet, so dass das Schmierwasser entlang der gesamten axialen Breite der Spalte 38, 40 in die Spalte 38, 40 eingeführt wird.

Das durch die Zuführmittel 34, 36 strömende Wasser wird in Tangentialrichtung - wie durch zwei Pfeile 44 dargestellt - in jeweils einen im Verhältnis zu den Spalten 38, 40 radial verbreiterten Raum eingeführt, der als Lagertasche 46, 48 zur Vereinigung des neu eingeführten Wassers mit dem aus den Spalten 38, 40 in die Lagertaschen 46, 48 eintretenden Wasser dient. In diesen Taschen wird die tangentiale Strömung des Wassers durch Innenflächen 50, 52 der Schalenelemente 18, 20 aufrechterhalten, so dass das Wasser die Lagertaschen 46, 48 in Tangentialrichtung durchströmt und in Tangentialrichtung in die Spalte 38, 40 eingeführt wird.

Das in FIG 2 dargestellte Radialgleitlager 14 ist als Mehrkeillager mit zwei Wasserkeilen ausgeführt, die entlang der Spalte 38, 40 kontinuierliche verjüngend ausgeformt sind und zwar bis zu einer Vereinigung der Spalte 38, 40 mit den Lagertaschen 46, 48 bzw. des Wasserfilms 22 mit dem neu zugeführten Wasser. Die Keile werden durch eine Schneckensegmentform der Statorlagerschale 16 ausgebildet, wobei sich jede der Innenflächen 50, 52 im Verlauf der Wasserströmung durch die Spalte 38, 40 über einen Bereich von etwa 180° kontinuierlich radial der Rotationsachse 12 annähert. Durch die stetige Verjüngung der Spalte 38, 40 wird das einströmende Wasser in seiner tangentialen Bewegung kontinuierlich abgebremst, so dass es durch seine kinetische Energie stetig in Tangentialrichtung drückt, wodurch eine hohe Stabilität des Wasserfilms 22 in den Spalten 38, 40 erreicht wird.

Die beiden Schalenelemente 18, 20 sind Halbschalen, deren Innenflächen 50, 52 jeweils kreissegmentförmig um eine Achse 54, 56 ausgeführt sind. Beide Achsen 54, 56 sind versetzt zur idealen Rotationsachse 12 der Welle 4 angeordnet, und zwar sowohl seitlich versetzt, als auch unterschiedlich nach unten versetzt, wie aus FIG 2 zu ersehen ist. Hierbei ist die Achse 54 des oberen Schalenelements 18 etwas tiefer als die Achse 56 des unteren Schalenelements 20.

Durch die tiefere Lage der Achse 54 ist der Spalt 40 zwischen der Welle 4 und der Innenfläche 50 des oberen Schalenelements 18 über seine gesamte tangentiale Länge an jeder Stelle radial enger als der Spalt 38 an der bezüglich der Rotationsachse 12 genau gegenüberliegenden Stelle. Auf diese Weise wird weniger Schmierwasser in den Spalt 40 eingezogen als in den Spalt 38, so dass auch das Zuführmittel 36 radial enger ausgeführt sein kann als das Zuführmittel 34.

Zusätzlich ist eine Verjüngung des Spalts 40, also die Abnahme der radialen Dicke des Spalts 40 pro tangentialer Strecke, kleiner als die Verjüngung des Spalts 38, so dass die Spaltenden 58, 60 nahezu gleich dick sind, wohingegen der Spaltanfang des unteren Spalts 38 an der Stelle der Einströmstelle 62 des frischen Wassers mit dem aus dem Spalt 40 austretenden Wassers erheblich dicker ist als der Spaltanfang des oberen Spalts 40 an der Einströmstelle 64.

Es wird hiermit dem Umstand Rechnung getragen, dass die Welle 4 durch ihr Eigengewicht einen stabileren Wasserfilm nach unten hin benötigt als nach oben hin. Durch die stärkere radiale Verjüngung des Spalts 38 über den Umfang hin wird das Schmierwasser im Spalt 38 stärker tangential abgebremst und drückt stärker in eventuelle Störungen und Wirbel ein, deren Ausbreitung dadurch gehemmt wird.

Durch den Versatz der beiden Achsen 54, 56 zueinander und zur idealen Rotationsachse 12 der Welle 4, als der Rotationsachse 12 ohne Auslenkungen aus einer Mittelposition oder Vibrationen, sind die beiden Schalenelemente 18, 20 unterschiedlich versetzt zur Rotationsachse 12 angeordnet, so dass die Schneckenform bzw. die kontinuierliche Verjüngung der Spalte 38, 40 durch den Versatz der kreissegmentförmigen Innenflächen 50, 52 zustand kommt. Es ist jedoch alternativ denkbar, dass die Innenflächen 50, 52 nicht kreissegmentförmig geformt sind sondern mit einem in Rotationsrichtung 42 stetig abnehmenden Radius, so dass ein Schneckenzentrum beispielsweise mit der idealen Rotationsachse 12 der Welle 4 zusammenfällt, die Verjüngung der Spalte 38, 40 jedoch durch die abnehmenden Radien zustande kommt.

In FIG 1 ist lediglich die Niederdruckseite der Welle 4 der Kondensationsturbine dargestellt und die Lagerung der Welle 4 mit dem hydrostatischen Wasserradiallager beschrieben. Es ist jedoch selbstverständlich möglich und vorteilhaft, die Welle 4 an beiden Enden in einem solchen hydrostatischen Wasserradiallager zu lagern.

## Patentansprüche

1. Radialgleitlager (14) zur Lagerung einer Welle (4) einer Turbomaschine, insbesondere einer Kondensationsturbine, mittels eines um die Welle (4) aufgebauten Wasserfilms (22), umfassend eine Wasserzuführung zum Zuführen von Wasser zum Wasserfilm (22),
**dadurch gekennzeichnet, dass**
die Wasserzuführung ein Zuführmittel (34, 36) zum in Umfangsrichtung tangential ausgerichteten Zuführen von Wasser zum Wasserfilm (22) aufweist.

2. Radialgleitlager (14) nach Anspruch 1,
**gekennzeichnet durch**
seine Ausbildung als Wellendichtung zur Abdichtung eines Wellenendes der Welle (4) gegen Turbinendampf, wobei dem Wasserfilm (22) eine abdichtende Funktion zukommt.

3. Radialgleitlager (14) nach Anspruch 1 oder 2,
**gekennzeichnet durch**
seine Ausbildung als Mehrkeillager.

4. Radialgleitlager (14) nach einem der vorhergehenden Ansprüche,
**gekennzeichnet durch**
eine schneckensegmentförmige Statorlagerschale (16).

5. Radialgleitlager (14) nach Anspruch 4,
**dadurch gekennzeichnet, dass**
die Statorlagerschale (16) eine kreissegmentförmige Lagerinnenfläche (50, 52) aufweist.

6. Radialgleitlager (14) nach einem der vorhergehenden Ansprüche,
**gekennzeichnet durch**
eine Statorlagerschale (16) mit mehreren versetzt zu einer idealen Rotationsachse (12) der Welle (4) angeordneten Schalenelementen (18, 20).

7. Radialgleitlager (14) nach Anspruch 6,
**dadurch gekennzeichnet, dass**
die Schalenelemente (18, 20) unterschiedlich versetzt zur idealen Rotationsachse (12) angeordnet sind.

8. Radialgleitlager (14) nach Anspruch 6 oder 7,
**dadurch gekennzeichnet, dass**
die Schalenelemente (18, 20) Halbschalen sind.

9. Radialgleitlager (14) nach einem der vorhergehenden Ansprüche,
**gekennzeichnet durch**
zumindest eine Lagertasche (46, 48) zum Zuführen des Wassers zum Wasserfilm (22), wobei das Zuführmittel (34, 36) zum zumindest überwiegend tangential ausgerichteten Zuführen des Wassers zur Lagertasche (46, 48) ausgebildet ist.

## Claims

1. Radial sliding bearing (14) for supporting a shaft (4) of a turbomachine, in particular a condensation turbine, by means of a water film (22) built up around the shaft (4), comprising a water feed for feeding water to the water film (22),
**characterised in that**
the water feed has a feed means (34, 36) to feed water to the water film (22) tangentially in a peripheral direction.

2. Radial sliding bearing (14) according to claim 1,
**characterised by**
its configuration as a shaft seal for sealing a shaft end of the shaft (4) off from turbine steam, the water film (22) being assigned a sealing function.

3. Radial sliding bearing (14) according to claim 1 or 2,
**characterised by**
its configuration as a multiple wedge bearing.

4. Radial sliding bearing (14) according to one of the preceding claims,
**characterised by**
a stator bearing shell (16) in the shape of a worm segment.

5. Radial sliding bearing (14) according to claim 4,
**characterised in that**
the stator bearing shell (16) has a bearing inner surface (50, 52) in the shape of an arc.

6. Radial sliding bearing (14) according to one of the preceding claims,
**characterised by**
a stator bearing shell (16) with a number of shell elements (18, 20) offset in relation to an ideal rotation axis (12) of the shaft (4).

7. Radial sliding bearing (14) according to claim 6,
**characterised in that**
the shell elements (18, 20) are offset differently in relation to the ideal rotation axis (12).

8. Radial sliding bearing (14) according to claim 6 or 7,
**characterised in that**
the shell elements (18, 20) are half shells.

9. Radial sliding bearing (14) according to one of the preceding claims,
**characterised by**
at least one bearing pocket (46, 48) for feeding the water to the water film (22), the feed means (34, 36) being configured to feed the water to the bearing pocket (46, 48) at least predominantly tangentially.

## Revendications

1. Palier lisse à charge radiale (14) pour le positionnement d'un arbre (4) d'une turbomachine, en particulier d'une turbine à condensation, au moyen d'un film hydrique (22) constitué autour de l'arbre (4), comprenant une amenée d'eau pour amener de l'eau au film hydrique (22),
**caractérisé en ce que**
l'amenée d'eau présente un moyen d'amenée (34, 36) pour l'amenée d'eau au film hydrique (22), l'amenée d'eau ayant une orientation tangentielle dans la direction périphérique.

2. Palier lisse à charge radiale (14) selon la revendication 1,
**caractérisé par**
sa configuration en tant que garniture d'étanchéité d'arbre pour l'étanchéité d'une extrémité d'arbre de l'arbre (4) vis-à-vis de la vapeur de turbine, une fonction d'étanchéité étant ajoutée au film hydrique (22).

3. Palier lisse à charge radiale (14) selon la revendication 1 ou 2
**caractérisé par**
sa configuration en tant que palier à rainures multiples.

4. Palier lisse à charge radiale (14) selon l'une des revendications précédentes,
**caractérisé par**
une coquille de coussinet de stator en forme de segment de vis (16).

5. Palier lisse à charge radiale (14) selon la revendication 4,
**caractérisé en ce que**
la coquille de coussinet de stator (16) présente une surface interne de palier en forme de segment circulaire (50, 52).

6. Palier lisse à charge radiale (14) selon l'une des revendications précédentes,
**caractérisé par**
une coquille de coussinet de stator (16) comportant plusieurs éléments de coquille (18, 20) disposés en décalage par rapport à un axe de rotation idéal (12) de l'arbre (4).

7. Palier lisse à charge radiale (14) selon la revendication 6,
**caractérisé en ce que**
les éléments de coquille (18, 20) sont disposés avec un décalage différent par rapport à l'axe de rotation idéal (12).

8. Palier lisse à charge radiale (14) selon la revendication 6 ou 7,
**caractérisé en ce que**
les éléments de coquille (18, 20) sont des demi-coquilles.

9. Palier lisse à charge radiale (14) selon l'une des revendications précédentes,
**caractérisé par**
au moins une poche de palier (46, 48) pour l'amenée de l'eau au film hydrique (22), le moyen d'amenée (34, 36) étant configuré pour l'amenée de l'eau à la poche de palier (46, 48), l'amenée d'eau ayant une orientation au moins essentiellement tangentielle.
